# EUROPÄISCHE PATENTANMELDUNG

(11) **EP 1 188 726 A2**
(43) Veröffentlichungstag der Anmeldung: **20.03.2002**
(21) Anmeldenummer: 01890268.4
(22) Anmeldetag: 18.09.2001
(51) Int. Cl.: C04B 18/02

(54) **Zuschlagstoff, insbesondere für Beton, sowie ein Verfahren zu dessen Herstellung**

(30) Priorität: 18.09.2000 AT 15882000
(71) Anmelder: Partlic, Georg, Dipl.-Ing., 8652 Kindberg (AT); Trenkwalder, Anton, 8670 Krieglach (AT)
(72) Erfinder: Partlic, Georg, Dipl.-Ing., 8652 Kindberg (AT); Trenkwalder, Anton, 8670 Krieglach (AT)
(74) Vertreter: Dungler, Karin

(57) **Zusammenfassung**

Zuschlagstoff in Form einer losen Schüttung, insbesondere für die Betonherstellung, welcher aus einem hydraulischen Bindemittel oder Bindemittelgemisch sowie einen (oder mehreren) Zusatzstoff(en) besteht. Dieser Zuschlagstoff in Form einer losen Schüttung ist je nach Porenvolumen für die Herstellung von Normalbeton, aber auch Leichtbeton geeignet.

## Beschreibung

Die Erfindung betrifft einen Zuschlagstoff insbesondere für Beton sowie ein Verfahren zu dessen Herstellung.

Es ist bekannt, Zuschlagstoffe bei der Herstellung von Baustoffen, wie Beton einzusetzen. Die Zugabe dieser Zuschlagstoffe bewirkt, daß die Baustoffmasse rasch abbindet bzw. verkittet. Übliche Zuschlagstoffe sind insbesondere bei der Betonherstellung Sand sowie Kies. Der Einsatz dieser Zuschlagstoffe ist jedoch abhängig von den geologischen Bedingungen, da in manchen Regionen beispielsweise niedrige Sand-, und/oder Kiesvorkommen existieren. Ferner haben diese Zuschlagstoffe den Nachteil, daß sie bei Zusatz von Wasser rasch zusammenpacken und daher schwer handhabbar sind.

Hier will die Erfindung Abhilfe schaffen. Erfindungsgemäß wird ein Zuschlagstoffe in Form einer losen Schüttung insbesondere für die Betonherstellung vorgeschlagen, welche aus einem hydraulischen Bindemittel oder Bindemittelgemisch sowie einem (oder mehreren) Zusatzstoff (en) besteht. Besonders bevorzugt ist ein Zuschlagstoff, welcher als hydraulisches Bindemittel oder Bindemittelgemisch Zement, Hüttensand, Produkte aus Schlacken, Trass, Microsilica sowie Flugaschen und Aschen (aller Art) enthält.

Unter Zusatzstoff wird im Sinne der Erfindung auch das im Zuschlagstoff vorliegende Wasser oder Kristallwasser verstanden. Dies deshalb, da bei hydraulischen Bindemitteln die Zuschlagstoffe unter Einsatz von Wasser erhärten. Es ist daher niemals ausgeschlossen, daß auch nach dem Erhärtungsvorgang Kristallwasser im Zuschlagstoff gebunden vorliegt. Als besonders bevorzugte Zusatzstoffe für das Erzielen einer losen Schüttung des erfindungsgemäßen Zuschlagstoffes erweisen sich Quellmittel und/oder Porenbildner.

Je nach Anteil des eingesetzten Quellmittels und/oder Porenbildners kann im Zuschlagstoff der Anteil an Poren gemessen in Volumsprozent eingestellt werden. Der erfindungsgemäße Zuschlagstoff eignet sich daher sowohl für die Herstellung von Normal- als auch für die Herstellung von Leichtbeton.

Erfindungsgemäß wird ferner ein Verfahren zur Herstellung des Zuschlagstoffes angeführt, welches dadurch gekennzeichnet ist, daß das hydraulische Bindemittel oder Bindemittelgemisch sowie der (die) Zusatzstoff(e) unter Zugabe von Wasser in einem Anteil von 1 bis 50 Gew.% bezogen auf 100 Gew.% Feststoffe unter Einwirkung mechanischer Kräfte abgebunden werden, so daß der Zusatzstoff in Form einer losen Schüttung erzeugt wird.

Besonders bevorzugt erfolgt das Durchmischen des hydraulischen Bindemittels oder Bindemittelgemisches unter Zugabe eines (oder mehrerer) Zusatzstoffes(en) wie Quellmittel und/oder Poren- und/oder Schaumbildner der Zuschlagstoff bei erhöhter Temperatur hergestellt wird. Besonders bevorzugt ist das Herstellungsverfahren des erfindungsgemäßen Zuschlagstoffes dann, wenn sowohl die Zugabe des Bindemittels, als auch das durch Mischen in mehreren Stufen erfolgt.

Weitere Ausführungsformen der Erfindung sind in den Unteransprüchen erläutert.

Eine mögliche Ausführungsform der Erfindung wird nunmehr anhand eines Anlagenschemas gemäß beiliegender Zeichnung sowie eines Beispieles näher erläutert:

Das Anlagenschema zeigt einen Kaskadenmischer 1, bestehend aus den Mischungseinheiten A, B, C und D. Diese Mischungseinheiten können beispielsweise Zwang- oder Freifallmischer sein. Die Temperatur in den Mischern wird nach dem Gegenstromprinzip eingestellt. Als hydraulisches Bindemittel wird beispielsweise Zement eingesetzt. Dieser wird wie üblich durch Mahlen und Brennen vorbehandelt, in den Vorratsbehälter 4 übergeführt und über Rohrleitungen in die Mischereinheit A eingebracht. In die Mischereinheit A werden ferner das Quellmittel 2 sowie Wasser 3 zugegeben. Der Anteil an Bindemittel liegt in einem Bereich von 5 bis 95 Gew.-%, je nach dem, wie hoch der Anteil an weiteren Füll- oder Zusatzstoffen ist. Als Füllstoffe eignen sich beispielsweise Recyclingprodukte in Form Baurestmassen. Als Zusatzmittel können auch alle gängigen Betonzusatzmittel wie Betonverflüssiger, Fließmittel und Erstarrungsbeschleuniger gewählt werden. Der Anteil an Quellmittel liegt beispielsgemäß in einem Bereich von 0,1 bis 20 Gew.-%. Um eine homogene Mischung aus Zementleim bereitstellen zu können, hat sich in besonders vorteilhafter Weise als Mischungseinheit A ein Zwangmischer erwiesen. Um noch zusätzlich die Mischung des Zementleimes homogenisieren zu können, wird Wasser in einem Anteil von 1 bis 50 Gew.-% zugesetzt. Dieser nunmehr gebildete Zementleim wird anschließend der Mischereinheit B vorzugsweise einem Freifallmischer zugeführt. In diesen wird eine weitere Bindemittelmenge 4' über Rohrleitungen eingebracht. Diese zusätzliche Bindemittelzugabe 4' dient dazu, die Oberflächenbeschaffenheit des endgefertigten Zuschlagstoffes zu beeinflussen. Eine weitere innige Durchmischung des hydraulischen Bindemittels mit den Füll- oder Zusatzstoffen und dem Quellmittel erfolgt in den Mischereinheiten C und D. Je nach Mischungsdauer sowie Mischungsgeschwindigkeit wird nunmehr bedingt durch die eingesetzten Quellmittel die lose Schüttung des Zuschlagstoffes, vorzugsweise in Form von Körnern ausgebildet. Dabei liegt die Korngröße in einem Bereich zwischen 1 und 80 mm. Sie kann durch die Parameter während des Mischens wie Geschwindigkeit sowie mechanischer Einwirkung und auch der Maßgabe einer Kaskadenvorrichtung beeinflußt werden. Weiters wird ebenso proportional zum eingesetzten Quellmittel bzw. den vorgenannten Mischungsparametern das Porenvolumen im endgefertigten Zuschlagstoff beeinflußt werden. Dabei ist es möglich, ein Porenvolumen von bis zu 90 Vol.-% bereitzustellen. Ferner erfolgt in den Mischungseinheiten C und D der kontinuierliche Entzug des eingesetzten Wassers, so daß der Trocknungsprozeß des Zuschlagstoffes einsetzt. Dieser kann nach Verlassen der Mischungseinheit D in Form einer losen Schüttung 5, beispielsweise in Form der vorgenannten Kugeln dem Kaskadenmischer entnommen werden.

Eine weitere Ausführungsform liegt in der Variation des hydraulischen Bindemittels. So ist es denkbar, in den Vorratsbehälter 4 Hüttensand anstelle von Zement einzubringen. Dieser Abfallstoff des Hüttenwesens kann in Kaskadenmischer besonders gut eingebunden werden, so daß im Vorratsbehälter 4' durch die Zugabe von Zement eine weitere hohe Oberflächenverdichtung des Zuschlagstoffes erfolgt. Durch dieses schrittweise Mischen ist der Hüttensand, welcher gegebenenfalls Giftstoffe enthalten kann, so gut abgebunden, daß er etwaiges Eluiren dieser Giftstoffe stark reduziert ist. Zusammenfassend kann gesagt werden, daß sich der erfindungsgemäße Zuschlagstoff in Form einer losen Schüttung je nach Porenvolumen für die Herstellung von Normalbeton, aber auch Leichtbeton eignet. Wird durch Erhöhung des Anteils an Quellmittel bzw. Porenbildner der Volumenanteil an Poren in Richtung der 90 Vol.-% verschoben, so liegt ein loser Zuschlagstoff mit relativ niedrigem Gewicht vor, welcher einerseits die für den Zuschlagstoff üblichen Eigenschaften, wie das Abbinden und Verkitten der Betonmischung hervorruft und andererseits das Gesamtgewicht der Betonmischung nur unwesentlich beeinflußt. Dies ist insbesondere dann von Vorteil, wenn sogenannte Leichtbetonmischungen, beispielsweise beim Errichten von Hochhäusern benötigt werden.

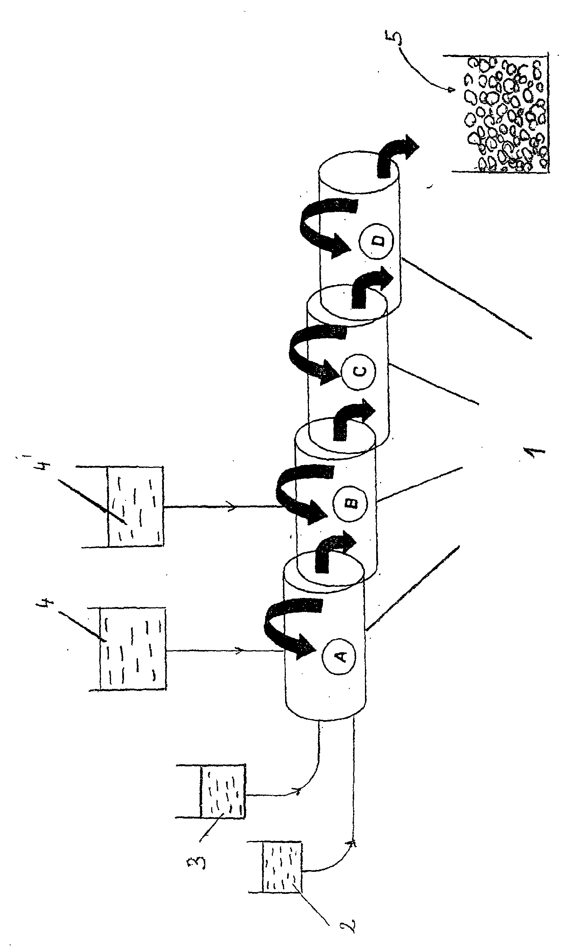

## Patentansprüche

1. Zuschlagstoff in Form einer losen Schüttung, insbesondere für die Betonherstellung, bestehend aus einem hydraulischen Bindemittel oder Bindemittelgemisch sowie einem (oder mehreren) Zusatzstoff(en).

2. Zuschlagstoff nach Anspruch 1, **dadurch gekennzeichnet, dass** der Anteil an hydraulischem Bindemittel oder Bindemittelgemisch 5 bis 95 Gew.-% beträgt.

3. Zuschlagstoff nach Anspruch 1 oder 2, **dadurch gekennzeichnet, dass** das hydraulische Bindemittel oder Bindemittelgemisch Zement, Hüttensand, Produkte aus Schlacken, Trass, Microsilica, Flugaschen, Aschen (aller Art) enthält.

4. Zuschlagstoff nach einem der Ansprüche 1 bis 3, **dadurch gekennzeichnet, dass** der Zusatzstoff ein Quellmittel und/oder Porenbildner ist.

5. Zuschlagstoff nach Anspruch 4, **dadurch gekennzeichnet, dass** der Anteil an Quellmittel und/oder Porenbildner 0,1 bis 20 Gew.-% beträgt.

6. Zuschlagstoff nach Anspruch 4 oder 5, **dadurch gekennzeichnet, dass** das Quellmittel Aluminiumpulver oder Magnesium ist.

7. Zuschlagstoff nach Anspruch 4 oder 5, **dadurch gekennzeichnet, dass** der Porenbildner ein Tensid, Proteinschaum oder Wurzelharz ist.

8. Zuschlagstoff nach einem der Ansprüche 1 bis 7, **dadurch gekennzeichnet, dass** der Zuschlagstoff in Form von Kugeln, Körnern oder Pellets vorliegt.

9. Zuschlagstoff nach einem der Ansprüch 1 bis 8, **dadurch gekennzeichnet, daß** der Zuschlagstoff porös ist und einen Anteil an Poren von bis zu 90 Vol.-% aufweist.

10. Zuschlagstoff nach einem der Ansprüche 1 bis 9, **dadurch gekennzeichnet, dass** der Zuschlagstoff als Zusatzstoff(e) einen (oder mehrere) Füllstoff(e) in einem Anteil von max. 95 Gew.-% enthält.

11. Zuschlagstoff nach Anspruch 10, **dadurch gekennzeichnet, dass** der (die) Füllstoff(e)aus der Gruppe Sand, Kies oder Recyclingprodukt ausgewählt wird (werden).

12. Zuschlagstoff nach einem der Ansprüche 1 bis 11, **dadurch gekennzeichnet, dass** der Zuschlagstoff eine Rohdichte von 200 bis 4000 kg/m³, vorzugsweise > 2000 kg/m³, aufweist.

13. Verfahren zum Herstellen eines Zuschlagstoffes insbesondere nach einem der Ansprüche 1 bis 12, **dadurch gekennzeichnet, dass** das hydraulische Bindemittel oder Bindemittelgemisch sowie der (die) Zusatzstoff(e) unter Zugabe von Wasser in einem Anteil von 1 bis 50 Gew.% bezogen auf 100 Gew.% Feststoffe unter Einwirkung mechanischer Kräfte abgebunden werden, so daß der Zusatzstoff in Form einer losen Schüttung erzeugt wird.

14. Verfahren nach Anspruch 13, **dadurch gekennzeichnet, dass** der Zuschlagstoff unter Durchmischen des hydraulischen Bindemittels oder Bindemittelgemisches mit einem (oder mehreren) Zusatzstoff(en) wie Quellmittel und/oder Porenbildner und/oder Schaumbildner bei erhöhter Temperatur hergestellt wird.

15. Verfahren nach Anspruch 13 oder 14, **dadurch gekennzeichnet, dass** die Zugabe an Bindemittel oder Bindemittelgemisch sowie das Durchmischen in mehreren Stufen erfolgt.

16. Verfahren nach einem der Ansprüche 13 bis 15, **dadurch gekennzeichnet, dass** durch Regeln der Mischgeschwindigkeit der Zuschlagstoff in Form von Körnern, Kugeln oder Pellets hergestellt wird.

17. Verfahren nach einem der Ansprüche 13 bis 16, **dadurch gekennzeichnet, dass** durch die mechanischen Kräfte während des Mischens die Größe der Körner, Kugeln oder Pellets einstellbar ist.

18. Verfahren nach einem der Ansprüche 13 bis 17, **dadurch gekennzeichnet, dass** während des Mischens wenigstens teilweise eine Trocknung erfolgt.

19. Verfahren nach Anspruch 18, **dadurch gekennzeichnet, dass** der Zuschlagstoff bei einer Temperatur von 20° bis 100°C, bevorzugt von 40° bis 80°C und besonders bevorzugt von etwa 60°C, getrocknet wird.
